(19) Europäisches Patentamt
European Patent Office
Office européen des brevets

(11) EP 1 199 543 B1

(12) # FASCICULE DE BREVET EUROPEEN

(45) Date de publication et mention de la délivrance du brevet:
**23.09.2009 Bulletin 2009/39**

(51) Int Cl.:
***G01B 21/30*** *(2006.01)* ***G01B 5/28*** *(2006.01)*
***G01B 7/34*** *(2006.01)* ***B21B 38/02*** *(2006.01)*

(21) Numéro de dépôt: **01402728.8**

(22) Date de dépôt: **19.10.2001**

(54) **Procédé et dispositif de detection de planéité**

Verfahren und Vorrichtung zur Planheitsermittlung

Method and device for flatness detection

(84) Etats contractants désignés:
**AT BE CH CY DE DK ES FI FR GB GR IE IT LI LU MC NL PT SE TR**

(30) Priorité: **20.10.2000 FR 0013495**

(43) Date de publication de la demande:
**24.04.2002 Bulletin 2002/17**

(73) Titulaire: **Siemens VAI Metals Technologies SAS
42400 Saint Chamond (FR)**

(72) Inventeurs:
- **Faure, Jean-Paul
95610 Eragny sur Oise (FR)**
- **Malard, Thierry
95290 l'Isle Adam (FR)**

(74) Mandataire: **Fischer, Michael et al
Siemens Schweiz AG,
Albisrieder Strasse 245
8047 Zürich (CH)**

(56) Documents cités:
**EP-A- 0 775 890**
**EP-A- 0 858 845**
**WO-A-01/05530**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

L'invention a pour objet un procédé et un dispositif de détection de planéité d'un produit en bande métallique défilant suivant une direction longitudinale et s'applique spécialement à des bandes se trouvant à une température élevée.

Lors du laminage de bandes de métal et notamment de tôles minces laminées, il peut se produire des défauts de planéité qui apparaissent lorsque la bande est au repos mais sont à l'état latent dans la bande sous traction. De tels défauts proviennent, en général, de légères variations, sur la largeur de la bande, de l'allongement réalisé par le laminage et peuvent être corrigés en agissant sur les conditions de laminage et, en particulier, sur la répartition, dans le sens transversal, de la pression de serrage appliquée entre les cylindres de travail.

A cet effet, il est possible, dans les laminoirs modernes, d'agir sur le profil de l'entrefer de passage du produit, par exemple en exerçant des efforts de cambrage sur les extrémités des cylindres de travail. On peut aussi utiliser un cylindre de soutien comprenant une enveloppe déformable montée rotative autour d'un arbre fixe et prenant appui sur celui-ci par une pluralité de vérins répartis sur la largeur de la bande et qui peuvent être réglés en position et en pression.

Ces moyens de réglage sont commandés à partir des informations données par un dispositif de mesure, placé en aval du laminoir, et sensible aux variations, sur la largeur de la bande, de l'effort de traction appliqué sur celle-ci qui correspondent elles-mêmes aux variations d'allongement des fibres longitudinales de la bande.

Un tel dispositif de mesure est constitué, habituellement, d'un rouleau déflecteur comprenant un corps cylindrique monté rotatif autour d'un axe perpendiculaire à la direction longitudinale de défilement de la bande. Celle-ci est appliquée sous traction sur un secteur angulaire de la face externe du rouleau qui est équipé d'une série de capteurs permettant de mesurer les variations de la pression locale d'application de la bande. Habituellement, ces détecteurs sont régulièrement écartés les uns des autres et répartis sur toute la longueur du rouleau, la bande étant ainsi divisée en une série de zones longitudinales ayant chacune une largeur déterminée, sur lesquelles on intègre la mesure du défaut latent à corriger.

Dans une disposition connue décrite, par exemple, dans le document US-3.481.194, le rouleau déflecteur comprend un corps central tubulaire d'épaisseur suffisante pour donner la résistance nécessaire et muni, sur sa face externe, d'une pluralité de logements dans lesquels sont placés des capteurs de mesure.

D'une façon générale, un rouleau de mesure comprend une pluralité de zones de détection réparties sur toute sa longueur et munie chacune d'un capteur pour l'émission d'un signal dépendant de la pression d'application de la partie correspondante de la bande, lors du passage de cette zone de détection dans le secteur angulaire de contact de la bande avec le rouleau.

D'autre part, pour éviter des interférences entre les mesures effectuées sur deux zones de mesure adjacentes, les capteurs sont avantageusement décalés angulairement d'une zone à la suivante.

Dans une telle disposition, chaque capteur de mesure est sensible à la pression d'application de la bande mais peut également être influencé par d'autres facteurs qui peuvent perturber la mesure.

Par exemple, pour éviter un contact direct entre les capteurs et la bande en défilement, chaque logement d'un capteur est fermé, vers l'extérieur, par une paroi de protection qui peut être constituée d'une enveloppe mince recouvrant l'ensemble du corps tubulaire du rouleau ou bien d'une pièce en forme de calotte qui se déforme légèrement pour transmettre aux capteurs la pression appliquée par la bande. Un tel dispositif est donc sensible aux déformations thermiques produites par une élévation de température du rouleau.

De même, les capteurs de mesure ne sont pas prévus, normalement pour fonctionner à une température élevée.

C'est pourquoi, jusqu'à présent, les rouleaux de mesure de planéité étaient utilisés dans les installations de laminage à froid dans lesquels la bande laminée peut être maintenue à une température modérée.

Cependant, les défauts latents qui résultent des variations d'allongement sur la largeur de la bande apparaissent aussi lors du laminage à chaud et il est apparu qu'il serait intéressant d'éviter, dès ce moment, les risques de défauts de planéité.

Pour cela, il avait semblé suffisant jusqu'à présent, d'associer au laminoir, un modèle mathématique permettant de prévoir les zones de défauts afin d'éviter, autant que possible leur apparition, en agissant sur les différents moyens de réglage du laminoir. Les défauts à corriger peuvent aussi être déterminés par des moyens optiques sur le produit hors traction, c'est-à-dire sur la tête de bande, avant l'enroulement sur la bobineuse. Un tel système ne permet donc pas de contrôler la planéité du produit sur toute sa longueur et il est donc préférable de détecter les défauts latents dès la sortie du laminoir.

A cet effet, on a proposé, dans le document EP-A-0.858.845, de placer dans une ligne de laminage à chaud, un rouleau de mesure sur lequel la bande peut être appliquée sous traction.

Cependant, même dans le cas d'un métal non-ferreux tel que l'aluminium, la bande à chaud se trouve à une température élevée et il en résulte des perturbations dans les mesures qui doivent être compensées. On peut, par exemple, effectuer un étalonnage du rouleau à diverses températures pour apporter aux mesures les corrections nécessaires en fonction de la température de la bande mais un tel étalonnage n'est pas facile à réaliser.

L'invention a pour objet de résoudre ces problèmes grâce à des dispositions particulièrement simples qui

peuvent s'appliquer à tous types de rouleaux de mesure de planéité et qui permettent d'éviter un étalonnage des capteurs en fonction des différentes températures de fonctionnement.

L'invention s'applique donc, d'une façon générale, à un procédé et un dispositif de détection de la planéité d'un produit en bande dans lequel la bande est mise sous tension et appliquée sur un secteur angulaire d'un rouleau de mesure monté rotatif autour d'un axe perpendiculaire à la direction longitudinale de défilement de la bande et ayant une face externe cylindrique comprenant un secteur angulaire de contact avec la bande et un secteur libre.

Conformément à l'invention, on réalise un refroidissement forcé du rouleau par circulation d'un fluide caloporteur le long d'au moins une partie du secteur libre de la face externe du rouleau et l'on détermine les paramètres déterminant l'efficacité du refroidissement tels que l'ouverture du secteur angulaire de refroidissement le long duquel circule le fluide, la température initiale de celui-ci et le débit de circulation, de telle sorte que, après s'être échauffée en passant dans le secteur de contact avec la bande, la face externe du rouleau soit ramenée, par son passage dans le secteur de refroidissement du rouleau, à une température d'équilibre déterminée.

Dans un premier mode de réalisation particulièrement avantageux, on réalise le refroidissement forcé du rouleau par aspersion d'un fluide caloporteur au moyen de rampes d'aspersion réparties sur au moins une partie du secteur libre du rouleau et l'on règle au moins la température du fluide et le débit d'aspersion en fonction de la température de la bande, de la vitesse de défilement et des conditions d'échange thermique, de façon à ramener à un niveau déterminé la température de la face externe du rouleau immédiatement avant son passage dans le secteur de contact.

Dans un autre mode de réalisation, le rouleau de mesure de planéité étant placé au-dessous de la bande, la face externe de celui-ci comprend une partie inférieure qui plonge dans un bain de liquide caloporteur ménagé dans une cuvette placée au-dessous du rouleau et associée à des moyens de mise en circulation du liquide avec un débit réglable entre un orifice d'entrée et un orifice de sortie de la cuvette, et l'on règle au moins la température initiale du liquide à son arrivée dans le bain et le débit de circulation, de façon à ramener à un niveau déterminé la température de la face externe du rouleau immédiatement avant son passage dans le secteur de contact.

Grâce à ces dispositions, la face externe du rouleau est ramenée, avant son passage dans la zone de contact, à une température d'équilibre t qui est liée à la température de la bande $t_1$ et à la température initiale $t_2$ du fluide caloporteur par une formule de la forme :

$$t = \frac{a\sqrt{A}\ t_1 + b\sqrt{B}\ t_2}{a\sqrt{A} + b\sqrt{B}}$$

dans laquelle a est le coefficient d'échange thermique entre la bande et le rouleau, b est le coefficient d'échange thermique entre le fluide caloporteur et le rouleau, A le secteur angulaire de contact et B le secteur angulaire de refroidissement. Selon l'invention, on peut agir, en service, sur l'un au moins des paramètres de ladite formule pour maintenir la température d'équilibre t à un niveau constant.

L'invention couvre également un dispositif de détection de planéité pour la mise en oeuvre du procédé, comprenant un moyen de refroidissement forcé de la face externe du rouleau de mesure par circulation d'un fluide caloporteur le long d'au moins une partie du secteur libre du rouleau et des moyens de réglage des conditions de refroidissement pour le maintien de la face externe du rouleau à une température d'équilibre déterminée, avec refroidissement contrôlé de chaque zone de détection pendant son passage dans le secteur libre du rouleau.

L'invention s'applique spécialement aux rouleaux de mesure de planéité du type comprenant une pluralité de zones de détection réparties sur la longueur du rouleau et munies chacune d'un capteur pour l'émission d'un signal dépendant de la pression d'application d'une partie correspondante de la bande, lors du passage de ladite zone de détection dans le secteur angulaire de contact de la bande avec le rouleau, lesdites zones de détection étant ramenées à une même température d'équilibre à chaque passage dans le secteur libre du rouleau.

L'invention couvre également d'autres caractéristiques avantageuses et sera mieux comprise par la description suivante de certains modes de réalisation, donnés à titre d'exemple, et représentés sur les dessins annexés.

La figure 1 est une vue schématique, en coupe transversale, d'un dispositif de mesure de planéité selon l'invention, avec enroulement au-dessous du plan de défilement.

La figure 2 est un schéma du système de refroidissement d'un rouleau.

La figure 3 montre, en vue de côté, un autre mode de réalisation de l'invention, avec enroulement au-dessus du plan de défilement.

La figure 4 est une vue de dessus du rouleau de la figure 3.

La figure 5 est une vue schématique, en coupe transversale, d'un autre mode de réalisation de l'invention.

La figure 6 montre un autre mode de réalisation de l'invention, dans une autre application.

Sur la figure 1, on a représenté schématiquement, le montage d'un rouleau de mesure de planéité 1 sur lequel

est appliquée une bande métallique 2 qui défile suivant une direction longitudinale parallèle au plan de la figure et s'enroule sur une bobineuse 21 qui, dans cet exemple, est placée au-dessous du plan P de défilement de la bande. L'enroulement de la bande est effectué sous traction, la bobineuse 21 étant munie, à cet effet, de moyens connus qui n'ont pas besoin d'être décrits.

La bande 2 est déviée par le rouleau 1 et appliquée sur un secteur angulaire de celui-ci, sous une tension longitudinale déterminée par les moyens de commande de l'enroulement.

Le rouleau de mesure de planéité 1 peut être de tout type connu, par exemple, celui qui est décrit dans le brevet français N°2.468.878 de la même société. On sait que, d'une façon générale, un tel rouleau de planéité comprend un corps tubulaire 11 dans lequel sont ménagés des logements 12 qui sont fermés par une enveloppe mince 13 enfilée sur le corps tubulaire 11. A l'intérieur de chaque logement 12 est placé un dispositif de détection, par exemple un palpeur de déplacement 14 qui comprend un élément fixe prenant appui sur le fond du logement 12 et un élément mobile prenant appui sur la face interne de l'enveloppe 13 fermant le logement 12 vers l'extérieur.

Le rouleau 11 est monté rotatif autour de son axe 10 et il est équipé d'un certain nombre de détecteurs 12, 14 répartis sur toute sa longueur de façon à couvrir la largeur de la bande M appliquée sur le rouleau 1.

Une telle disposition est bien connue et ne nécessite pas une description détaillée. D'autres dispositions peuvent être utilisées pour mesurer les efforts appliqués sur le rouleau en plusieurs zones de détection réparties sur la longueur de celui-ci.

Jusqu'à présent, de tels rouleaux de planéité n'étaient utilisés que dans des installations de laminage à froid dans lesquelles la bande laminée présente une température modérée. Les dispositions selon l'invention permettent, en revanche, de mesurer la planéité d'une bande à température élevée, le rouleau de mesure 1 pouvant être placé en aval, dans le sens de défilement, d'une installation de laminage à chaud non représentée sur la figure.

La température de la bande à chaud arrivant sur le rouleau 1 peut être, par exemple, comprise entre 250°C et 400°C dans le cas d'un métal non ferreux mais elle pourrait être plus élevée. Il en résulte un échauffement important du rouleau par sa face externe.

Cependant, comme le montre la figure 2, la face externe du rouleau 1 n'est recouverte par la bande 2 que sur un secteur angulaire a, a' relativement réduit dont l'angle au centre A ne dépasse pas, normalement, 20° et comprend donc un secteur libre a', a compris entre 340 et 350°. L'invention met à profit cette disposition en réalisant un refroidissement forcé de la face externe 13 du rouleau par circulation d'un fluide caloporteur le long d'au moins une partie de ce secteur libre a, a' et en déterminant les conditions de refroidissement de façon à amener chaque zone de détection à une même température d'équilibre pendant son passage dans le secteur libre.

Dans la disposition de la figure 1, par exemple, le rouleau 1 est placé au-dessous de la bande et il est possible d'immerger la partie inférieure du secteur libre dans un bac 3 rempli d'un liquide caloporteur 31 tel que de l'eau. Ce bac 3 est largement ouvert vers le haut de façon que la partie inférieure du rouleau soit immergée sur un secteur angulaire B relativement important, par exemple, de l'ordre de 90 à 110°.

Ainsi, à chaque tour du rouleau, chaque partie 15 de l'enveloppe 13 fermant un logement 12, constitue une zone de détection qui s'échauffe d'abord au contact de la bande 2 en passant dans le secteur angulaire A mais est immédiatement refroidie au contact de l'eau 31 en passant dans le secteur b, b' d'angle au centre B.

Si l'on appelle $t_1$ la température de la bande 2 et $t_2$ la température du liquide 31 contenu dans le bac 3, la température t de la face externe du rouleau, après son passage dans le liquide 31 peut être donnée par la formule :

$$t = \frac{a\sqrt{A}\,t_1 + b\sqrt{B}\,t_2}{a\sqrt{A} + b\sqrt{B}}$$

dans laquelle a est le coefficient d'échange thermique spécifique entre la bande et le rouleau et b le coefficient d'échange thermique spécifique entre le fluide de refroidissement 31 et le rouleau 1.

Ces coefficients d'échange thermique dépendent notamment de la nature de l'enveloppe mince 13 constituant la face externe du rouleau 1, du fluide de refroidissement 31 et de l'angle d'ouverture des secteurs A et B.

Le bac 3 est relié à un circuit 4 de mise en circulation du fluide de refroidissement 31 entre une entrée et une sortie, comprenant des moyens 41 de réglage des paramètres de refroidissement tels que la température initiale et le débit de circulation du fluide 31 en fonction de la température $1_1$ de la bande, de façon à ramener la face externe 13 du rouleau à une température déterminée $t_3$.

A chaque tour du rouleau, chaque zone de détection est donc ramenée à un niveau de température constant avant de repasser dans le secteur angulaire A au contact de la bande 2. On assure ainsi la répétitivité de la mesure de la pression appliquée par la bande sur la paroi 15 ou du déplacement de celle-ci puisque l'influence thermique de la bande s'exerce toujours de la même façon.

Comme le refroidissement est effectué à chaque tour, avec un rapport constant entre le temps d'échauffement et le temps de refroidissement, la vitesse de défilement de la bande peut varier, par exemple en fonction de la réduction d'épaisseur effectuée dans le laminoir.

Cependant, on peut être amené à arrêter le défilement, par exemple pour intervenir sur le laminoir ou une autre partie de l'installation. Dans ce cas, la bande 2 reste appliquée sur la même partie du rouleau et il en résulte une élévation de température qui risque de détériorer les capteurs.

C'est pourquoi, il est prévu, en cas d'arrêt, d'écarter la bande 2 du rouleau 1 au moyen d'un rouleau déflecteur 5 monté rotatif aux extrémités de deux bras de support 51 qui peuvent pivoter autour d'un axe 52 entre une position écartée, représentée en trait plein sur la figure, pour laquelle la bande 2 est appliquée normalement sur la bande 1 et une position engagée, représentée en trait mixte, pour laquelle la bande 1 est soulevée par le rouleau 5 et légèrement écartée de la face externe 13 du rouleau 1.

Sur la figure 3, on a représenté, en vue de côté, un autre mode de réalisation dans lequel la bobineuse 21 est placée au-dessus du plan P de défilement de la bande 2.

Le rouleau de mesure 1 qui sert de rouleau déflecteur est alors placé, également, au-dessus de la bande 2 et il doit être associé à un dispositif de refroidissement placé sur le côté. Ce dispositif de refroidissement est alors constitué d'un caisson 30 ayant deux parois longitudinales 33, 34 parallèles à l'axe 10 du rouleau et s'étendant jusqu'à un bord 33', 34', placé à proximité immédiate de la face externe 13 du rouleau. Les extrémités 33', 34' sont écartées angulairement de façon à limiter un secteur de refroidissement d'angle au centre B au moins égal à un quadrant.

A l'intérieur du caisson 30 est placée au moins une rampe d'aspersion de fluide constituée d'une conduite 35 reliée à un circuit 36 d'alimentation en un fluide caloporteur et munie d'une pluralité d'orifices formant des buses d'aspersion 37 du fluide dirigées vers la face externe 13 du rouleau de façon que les jets de fluide soient sensiblement jointifs et couvrent un secteur angulaire du rouleau, sur toute la longueur de celui-ci. Avantageusement, le caisson 30 est muni de deux rampes d'aspersion 35 dont les buses 37 sont décalées angulairement et longitudinalement de façon à mieux répartir le fluide sur l'ensemble du secteur angulaire B. Comme précédemment, le circuit d'alimentation 36 est associé à un moyen 36' de réglage du débit aspergé en fonction de la température de la bande 2 pour maintenir la face externe 13 du rouleau 1 à une température déterminée, en avant du secteur d'application A.

Pour éviter un échauffement excessif d'une zone de détection en cas d'arrêt du défilement et, par conséquent, de la rotation du rouleau de mesure 1, celui-ci est associé à un rouleau déflecteur 5 monté à l'extrémité d'une paire de bras 51 pouvant pivoter autour d'un axe 52 entre une position relevée pour laquelle la bande 2 est appliquée sur la bobineuse 21 et une position abaissée pour laquelle la bande 2 est déviée par le rouleau 5 et se trouve légèrement écartée de la face externe du rouleau 1.

Dans les deux modes de réalisation qui viennent d'être décrits, pour permettre l'application sous tension de la bande 2 sur un secteur angulaire du rouleau de mesure de planéité 1, celui-ci constitue un rouleau déflecteur placé immédiatement en amont, dans le sens de défilement, de la bobineuse 21 de façon à déterminer l'application sous tension de la bande sur un secteur angulaire du rouleau de mesure 1.

Ceci ne présente pas d'inconvénient lorsque la bobineuse est placée à faible distance du laminoir comme, par exemple, dans le cas du laminage de métaux non ferreux tels que l'aluminium qui, à la sortie du laminage à chaud, se trouvent à une température relativement modérée, de l'ordre de 300 à 400°C et peuvent être enroulés en bobine immédiatement après la mesure.

En revanche, dans le cas des métaux ferreux tel que l'acier, la bande laminée se trouve à une température beaucoup plus élevée pouvant aller, par exemple de 700 à 1000°C, et doit subir un premier refroidissement avant d'être enroulée en bobine. Un banc de refroidissement doit alors être interposé entre le laminoir et la bobineuse qui se trouve donc placée à une distance assez importante du laminoir. Cependant, ce premier refroidissement n'est pas homogène sur la largeur de la bande et peut provoquer un raccourcissement inégal des fibres, les variations d'allongement dues au laminoir ne se retrouvant qu'après refroidissement complet de la bande enroulée en bobine. Si le rouleau de mesure est placé juste avant l'enroulement, à la sortie du banc de refroidissement, la mesure de la répartition d'allongement risque donc d'être faussée.

Lorsqu'un refroidissement est nécessaire avant l'enroulement en bobine, il est donc plus avantageux de placer le rouleau de mesure à la sortie du laminoir, avant le banc de refroidissement.

Cependant, s'il faut attendre l'enroulement sur la bobineuse de la tête de la bande pour mettre celle-ci sous tension, il ne sera pas possible de contrôler la planéité de la bande sur une longueur assez importante de celle-ci.

Pour éviter de tels inconvénients, il est donc préférable de mettre la bande sous tension au niveau du rouleau de mesure, dès la sortie du laminoir.

A cet effet, comme le montre la figure 5, le rouleau de mesure de planéité 1 peut être placé entre deux paires de rouleaux pinceurs 8, 8' comprenant chacun un rouleau fixe 81 et un rouleau mobile 82 monté sur un support 83 coulissant verticalement entre deux guides d'un châssis 84, sous l'action d'un vérin 85.

Le rouleau de planéité 1 est lui-même porté par un berceau de support 16 monté coulissant verticalement sous l'action d'un vérin 17.

En position abaissée des rouleaux 82, 82', la bande est pincée entre les deux paires de rouleaux 8, 8' et le vérin 17 de soulèvement du berceau de support 16 permet de régler le niveau relatif du rouleau de mesure 1 par rapport au plan de défilement de la bande et de déterminer ainsi un angle A d'application de la bande 2 sur le rouleau 1.

Dans cette disposition, au moins l'un des rouleaux pinceurs de chaque paire 8, 8' est entraîné en rotation à une vitesse qui peut être réglée séparément sur chaque paire 8, 8'.

De la sorte, il est possible de soumettre la section de la bande comprise entre les deux paires de rouleaux 8, 8' à une tension déterminée, en réglant séparément les vitesses de rotation des rouleaux pinceurs 8, 8' placés, respectivement, en amont et en aval du rouleau de mesure 1.

Des rampes d'aspersion 35 disposées de part et d'autre du rouleau 1 permettent de réaliser un refroidissement forcé du secteur libre de celui-ci.

D'autres rampes d'aspersion 38 peuvent être associées aux deux paires de rouleaux pinceurs 8, 8'.

Il est ainsi possible, comme précédemment, de régler l'intensité du refroidissement de façon à maintenir la face externe 13 du rouleau 1 à une température déterminée, ce qui permet d'assurer la répétitivité des mesures.

Il est à noter que le réglage individuel des vitesses de rotation des deux paires de rouleaux pinceurs 8, 8' permet de régler séparément les tensions appliquées sur la bande dans chaque section de celle-ci, respectivement entre la sortie du laminoir et les rouleaux pinceurs 8, sur le rouleau de mesure 1 entre les deux paires de rouleaux pinceurs 8, 8' et entre les rouleaux pinceurs 8' et la bobineuse 21.

Mais l'invention ne se limite pas aux détails des modes de réalisation qui viennent d'être décrits à titre d'exemple et couvre également d'autres variantes ou d'autres applications restant dans le cadre de protection défini par les revendications.

Par exemple, la mesure de planéité d'une bande à chaud pourrait être utile dans le cas d'une installation dite " mini-mill " comportant une coulée continue en bande mince suivie de quelques cages finisseuses en ligne, d'un banc de refroidissement et d'une bobineuse.

Sur la figure 6 qui montre, à titre d'exemple, une disposition de ce type, on a représenté seulement la dernière cage de finition 6. La bande qui défile de la gauche vers la droite sur la figure suivant un plan horizontal de laminage P passe d'abord entre les deux cylindres de travail 60 de la cage 6 puis sur un banc de refroidissement 23 comportant une table de support constituée d'une série de rouleaux 24 tangents au plan de défilement P, ainsi que des moyens de refroidissement qui ne sont pas représentés sur la figure.

Dans ce mode de réalisation de l'invention, le rouleau 1 de mesure de planéité est monté à la sortie du laminoir mais la bande peut être mise sous tension par la bobineuse placée à l'extrémité de la ligne. On admet, en effet, de ne pas contrôler la planéité sur la tête de bande dont la longueur est négligeable lorsque la bande est coulée en continu.

Cependant, pour déterminer l'angle d'application de la bande sur le rouleau de mesure 1, celui-ci est monté sur un berceau de support 7 qui peut pivoter, autour d'un axe 70, sur deux paliers alignés fixés, par exemple, sur la cage de laminage 6. Un vérin 71 commande le pivotement du rouleau 1 entre une position relevée représentée en trait plein sur la figure 5 et une position abaissée pour laquelle le rouleau 1' s'interpose entre deux rouleaux successifs 25, 25' de la table à rouleaux 23 et détermine donc l'application sur le rouleau de mesure 1, de la bande 2 qui, dans ce cas, est mise sous tension par la bobineuse placée à l'extrémité du banc de refroidissement 23 et non représentée sur la figure.

L'effort de traction appliqué sur la bande par la bobineuse peut être réglé en fonction de la vitesse de laminage entre les cylindres de travail 60, de façon à réaliser un enroulement à spires jointives.

L'ouverture du secteur angulaire d'application de la bande dépend du niveau de la position abaissée 1' du rouleau 1 par rapport au plan des rouleaux 25, 25', qui peut être réglé au moyen du vérin 71.

Comme dans le cas de la figure 3, le rouleau de mesure 1 est associé à un caisson de refroidissement 34 fixé sur le berceau 7 et muni de rampe 35 d'aspersion d'un fluide de refroidissement sur une partie du secteur libre du rouleau.

En cas d'arrêt du défilement, il suffit de commander un relèvement immédiat du berceau 7 pour écarter le rouleau de mesure de la bande afin d'éviter son échauffement.

Les signes de référence insérés après les caractéristiques techniques mentionnées dans les revendications, ont pour seul but de faciliter la compréhension de ces dernières et n'en limitent aucunement la portée.

## Revendications

1. Procédé de détection de la planéité d'un produit en bande métallique défilant suivant une direction longitudinale et se trouvant à une température élevée, dans lequel la bande (2) est mise sous tension et appliquée sur un secteur angulaire d'un rouleau de mesure de planéité (1) monté rotatif autour d'un axe perpendiculaire à la direction longitudinale de défilement de la bande (2) et ayant une face externe cylindrique (13) comprenant un secteur angulaire de contact avec la bande et un secteur libre,
**caractérisé par le fait que** l'on réalise un refroidissement forcé du rouleau de mesure de planéité (1) par circulation d'un fluide caloporteur le long d'au moins une partie du secteur libre de la face externe (13) du rouleau (1) et que

l'on détermine les paramètres déterminant l'efficacité du refroidissement tels que l'ouverture (B) du secteur angulaire de refroidissement le long duquel circule le fluide, la température initiale de celui-ci et le débit de circulation, de telle sorte que, après s'être échauffée en passant dans le secteur (a, a') de contact avec la bande (2), la face externe (13) du rouleau (1) soit ramenée, par son passage dans le secteur (b, b') de refroidissement du rouleau (1), à une température d'équilibre déterminée.

**2.** Procédé selon la revendication 1, **caractérisé par le fait que** l'on réalise le refroidissement forcé du rouleau (1) par aspersion d'un fluide caloporteur sur au moins une partie du secteur libre du rouleau (1) et que l'on règle au moins la température du fluide et le débit d'aspersion en fonction de la température de la bande (2), et des conditions d'échange thermique, de façon à ramener à un niveau déterminé la température de la face externe (13) du rouleau (1) immédiatement avant son passage dans le secteur de contact (a, a').

**3.** Procédé selon la revendication 1, **caractérisé par le fait que** le rouleau (1) de mesure de planéité étant placé au-dessous de la bande (2), la face externe (13) de celui-ci comprend une partie inférieure (b, b') qui plonge dans un bain (31) de liquide caloporteur ménagé dans une cuvette (3) placée au-dessous du rouleau (1) et associée à des moyens de mise en circulation du liquide avec un débit réglable entre un orifice d'entrée et un orifice de sortie de la cuvette (3), et que l'on règle au moins la température initiale du liquide à son arrivée dans le bain et le débit de circulation, de façon à ramener à un niveau déterminé la température de la face externe (13) du rouleau (1) avant chaque passage dans le secteur de contact (a, a').

**4.** Procédé selon l'une des revendications 1, 2, 3, **caractérisé par le fait que** la face externe (13) du rouleau (1) est ramenée, avant chaque passage dans la zone de contact (a, a'), à une température d'équilibre (t) qui est liée à la température de la bande ($t_1$) et à la température ($t_2$) du fluide caloporteur par une formule de la forme :

$$t = \frac{a\sqrt{A}\, t_1 + b\sqrt{B}\, t_2}{a\sqrt{A} + b\sqrt{B}}$$

dans laquelle (a) est le coefficient d'échange thermique entre la bande (2) et le rouleau (1), (b) est le coefficient d'échange thermique entre le fluide caloporteur (31) et le rouleau (1), (A) l'angle d'ouverture du secteur de contact (a, a') et (B) l'angle d'ouverture du secteur de refroidissement (b, b'), et que, en service, on agit sur l'un au moins des paramètres de ladite formule pour maintenir la température d'équilibre (t) à un niveau constant.

**5.** Dispositif de détection de la planéité d'un produit en bande (2) défilant suivant une direction longitudinale et soumis à un effort de traction, comprenant un rouleau de mesure de planéité (1) monté rotatif autour d'un axe perpendiculaire à la direction longitudinale de défilement et sur lequel la bande (2) est appliquée sous tension, ledit rouleau (1) ayant une face externe cylindrique (13) comprenant un secteur angulaire (a, a') de contact avec la bande et un secteur libre,. **caractérisé par le fait qu'**il comprend des moyens (3, 34) de refroidissement forcé de la face externe (13) du rouleau de mesure de planéité (1) par circulation d'un fluide caloporteur le long d'au moins une partie (b, b') du secteur libre du rouleau (1) et des moyens (30) de réglage des conditions de refroidissement pour le maintien de la face externe (13) du rouleau (1) à une température déterminée.

**6.** Dispositif de détection selon la revendication 5, **caractérisé par le fait que**, le rouleau de mesure (1) étant placé au-dessous de la bande (2) et comprenant un secteur angulaire supérieur (a, a') de contact avec la bande (2) et un secteur angulaire inférieur libre, le moyen de refroidissement forcé comprend une cuvette (3) remplie d'un bain de liquide caloporteur (31) dans lequel est immergée au moins une partie (b, b') du secteur libre du rouleau et reliée à un circuit de mise en circulation du liquide caloporteur comprenant un moyen (30) de réglage de la température ($t_2$) et du débit de circulation du liquide (31) en fonction de la température ($t_1$) de la bande (2).

**7.** Dispositif de détection selon la revendication 5, **caractérisé par le fait que** le moyen de refroidissement forcé comprend au moins une rampe d'aspersion (35) parallèle à la face externe (13) du rouleau, reliée à un circuit (36) d'alimentation en un fluide caloporteur et munie d'une pluralité de buses (37) d'aspersion, chacune, d'un jet de fluide recouvrant un secteur angulaire (B) de refroidissement, le circuit (36) étant associé à des moyens (36') de réglage du débit aspergé en fonction de la température de la bande (2).

8. Dispositif de détection selon la revendication 7, **caractérisé par le fait qu'**il comprend un caisson de refroidissement (30) s'étendant le long du secteur libre du rouleau et à l'intérieur duquel est placée au moins une rampe (35) d'aspersion de fluide, ledit caisson (30) ayant deux parois longitudinales (33, 34) parallèles à l'axe du rouleau (1) et écartées angulairement de façon à limiter un secteur (B) de refroidissement du rouleau, chaque paroi longitudinale (33, 34) ayant un bord (33', 34') parallèle à la face externe (13) du rouleau et écarté de celle-ci par une faible distance.

9. Dispositif selon l'une des revendications 5 à 8, **caractérisé par le fait qu'**il comprend un moyen (5) d'écartement rapide de la bande (2) par rapport au rouleau (1).

10. Dispositif de détection selon la revendication 9, **caractérisé par le fait que** le rouleau de mesure (1) est monté rotatif, autour de son axe (10), sur un berceau de support (7, 16) déplaçable suivant une direction transversale au plan de défilement de la bande (2), entre une position d'application du rouleau (1) sur celle-ci et une position écartée, ledit berceau (7, 16) étant associé à deux rouleaux déflecteurs (25, 25') (82, 82') placés respectivement en amont et en aval du rouleau de mesure (1) dans le sens de défilement de la bande (2) et du côté opposé au berceau par rapport à celle-ci, de façon que la bande (2) soit appliquée sur un secteur angulaire (A) déterminé du rouleau (1), dans la position d'application de celui-ci.

11. Dispositif de détection selon la revendication 10, **caractérisé par le fait que** le berceau de support (7) du rouleau est monté pivotant autour d'un axe (70) parallèle à l'axe du rouleau (1) et associé à au moins un vérin (71) de commande du pivotement du berceau (7) entre une position d'application du rouleau (1) sur la bande (2) et une position écartée.

12. Dispositif de détection selon la revendication 10, **caractérisé par le fait que** le berceau (16) de support du rouleau est monté coulissant perpendiculairement au plan de défilement de la bande (2), entre une position d'application et une position écartée.

13. Dispositif de détection selon l'une des revendications 10 à 12, **caractérisé par le fait que** le rouleau de mesure (1) est placé entre deux paires de rouleaux pinceurs, respectivement amont (8) et aval (8') comprenant chacune un rouleau fixe (81) et un rouleau (82) mobile verticalement pour le serrage de la bande 2 et que les deux paires de rouleaux pinceurs (8, 8') sont associées respectivement à des moyens individuels d'entraînement en rotation déterminant une vitesse angulaire des rouleaux aval (8') légèrement supérieure à la vitesse angulaire des rouleaux amont (8), de façon à soumettre la bande (2) à une tension déterminée d'application sur le rouleau de mesure (1).

14. Dispositif de détection selon la revendication 13, **caractérisé par le fait que** les vitesses de rotation et les couples appliqués sur les deux paires de rouleaux pinceurs, respectivement amont 8 et aval 8' sont réglées en fonction de la vitesse de laminage de façon à déterminer séparément les niveaux de tension de la bande (2), respectivement, à la sortie du laminoir (6), sur le rouleau de mesure (1) et sur la bobineuse (21).

15. Dispositif de détection selon l'une des revendications 5 à 14, **caractérisé par le fait que** le rouleau de mesure est du type comprenant une pluralité de zones de détection écartées dans le sens transversal à la bande et réparties sur toute la longueur du rouleau, chaque zone de détection comprenant un capteur d'émission d'un signal dépendant de la pression d'application d'une zone correspondante de la bande pendant le passage de celle-ci dans le secteur angulaire de contact, et que lesdites zones de détection sont ramenées à une même température d'équilibre, à chaque passage dans le secteur libre du rouleau.

## Claims

1. Process for detecting the flatness of a metal strip product running along a longitudinal direction and being set at a high temperature, wherein the strip (2) is put under tension and applied on an angular sector of a flatness measuring roll (1) assembled rotating around an axis perpendicular to the longitudinal direction of running of the strip (2) and having a cylindrical external face (13) comprising an angular sector of contact with the strip and a free sector, **characterized by** the fact that a forced cooling of the flatness measuring roll (1) is realized by circulation of a heat transfer fluid along at least one part of the free sector of the external face (13) of the roll (1) and that one determines the parameters setting the efficiency of the cooling such as the aperture (B) of the cooling angular sector along which circulates the fluid, the initial temperature of said fluid and the circulation flow rate, in such a way that, after running hot by going in the sector (a, a') of contact with the strip (2), the external face (13) of the roll (1) is brought back, by its going in the sector (b, b') of cooling of the roll (1), to a determined equilibrium temperature.

2. Process according to claim 1, **characterized by** the fact that a forced cooling of the roll (1) is realized by sprinkling of a heat transfer fluid on at least one part of the free sector of the roll (1) and that at least the fluid temperature and the sprinkling flow rate are adjusted according to the temperature of the strip (2), and to the heat exchange conditions, in order to bring back to a determined level the temperature of the external face (13) of the roll (1) immediately before its going in the sector of contact (a, a').

3. Process according to claim 1, **characterized by** the fact that the flatness measuring roll (1) being placed below the strip (2), the external face (13) of said roll comprises a lower part (b, b') that dips in a bath (31) of heat transfer liquid contained by a tank (3) placed below the roll (1) and associated with means of circulation of the liquid with an adjustable flow rate between an intake port and an outlet port of the tank (3), and that at least the initial temperature of the liquid at its intake in the bath and the flow rate are adjusted, in order to bring back to a determined level the temperature of the external face (13) of the roll (1) before each going in the sector of contact (a, a').

4. Process according to anyone of claims 1, 2, or 3, **characterized by** the fact that the external face (13) of the roll (1) is brought back, before each going in the zone of contact (a, a'), to an equilibrium temperature (t) which is linked to the temperature of the strip ($t_1$) and to the temperature ($t_2$) of the heat transfer fluid by a formula as per:

$$t = \frac{a\sqrt{A}t_1 + b\sqrt{B}t_2}{a\sqrt{A} + b\sqrt{B}}$$

wherein (a) is the heat exchange coefficient between the strip (2) and the roll (1), (b) is the heat exchange coefficient between the heat transfer fluid (31) and the roll (1), (A) is the aperture angle of the sector of contact (a, a') and (B) is the aperture angle of the cooling sector (b, b'), and that, in use, one acts on at least one of the parameters of said formula to keep the equilibrium temperature (t) to a constant level.

5. Device for detecting the flatness of a strip product (2) running along a longitudinal direction and put under a tensile load, comprising a flatness measuring roll (1) assembled rotating around an axis perpendicular to the running longitudinal direction and on which the strip (2) is applied under tension, said roll (1) having a cylindrical external face (13) comprising an angular sector (a, a') of contact with the strip and a free sector,
**characterized by** the fact it comprises means (3, 34) of forced cooling of the external face (13) of the flatness measuring roll (1) by circulation of a heat transfer fluid along at least one part (b, b') of the free sector of the roll (1) and means (30) of adjustment of the cooling conditions for the keeping of the external face (13) of the roll (1) at a determined temperature.

6. Detection device according to claim 5, **characterized by** the fact that, the flatness measuring roll (1) being placed below the strip (2) and comprising an upper angular sector (a, a') of contact with the strip (2) and a free lower angular sector, the means of forced cooling comprise a tank (3) filled with a bath of heat transfer liquid (31) wherein is immersed at least one part (b, b') of the roll free sector and linked to a circuit of circulation of the heat transfer liquid comprising means (30) of adjustment of the temperature ($t_2$) and of the circulation flow rate of the liquid (31) according to the temperature ($t_1$) of the strip (2).

7. Detection device according to claim 5, **characterized by** the fact that the means of forced cooling comprise at least one sprinkling rack (35) parallel to the external face (13) of the roll, linked to a circuit (36) of heat transfer fluid supply and supplied with a plurality of sprinklers (37) producing, each, a jet of fluid covering an angular sector (B) of cooling, the circuit (36) being associated with means (36') of adjustment of the sprinkled flow rate according to the temperature of the strip (2).

8. Detection device according to claim 7, **characterized by** the fact that it comprises a cooling box (30) stretching along the free sector of the roll and inside which is placed at least one rack (35) of sprinkling of fluid, said cooling box (30) having two longitudinal walls (33, 34) parallel to the axis of the roll (1) and spaced out in an angular manner in order to delimit a sector (B) of cooling of the roll, each longitudinal wall (33, 34) having a hedge (33', 34') parallel to the external face (13) of the roll and in spaced relation with said external face thanks to a small gap.

9. Detection device according to anyone of claims 5 to 8, **characterized by** the fact that it comprises means (5) of quick spacing out of the strip (2) from the roll (1).

**10.** Detection device according to claim 9, **characterized by** the fact that the flatness measuring roll (1) is assembled rotating, around its axis (10) , on a support cradle (7, 16) displaceable according to a transverse direction to the running plane of the strip (2), between a position of applying of the roll (1) on said strip and a spaced out position, said cradle (7, 16) being associated with two deflector rolls (25, 25')(82, 82') placed respectively upstream and downstream of the flatness measuring roll (1) in the running direction of the strip (2) and on the side opposite the cradle in comparison with said strip, so that the strip (2) is applied on a determined angular sector (A) of the roll (1) , in the position of applying of said roll.

**11.** Detection device according to claim 10, **characterized by** the fact that the support cradle (7) of the roll is assembled revolving around an axis (70) parallel to the axis of the roll (1) and is associated with at least one cylinder (71) of actuation of the revolving of the cradle (7) between a position of applying of the roll (1) on the strip (2) and a spaced out position.

**12.** Detection device according to claim 10, **characterized by** the fact that the support cradle (16) of the roll is assembled sliding perpendicularly to the running plane of the strip (2), between a position of applying and a spaced out position.

**13.** Detection device according to anyone of claims 10 to 12, **characterized by** the fact that the flatness measuring roll (1) is placed between two pairs of pinching rolls, respectively upstream (8) and downstream (8'), each pair comprising a fixed roll (81) and a roll (82) mobile vertically for the tightening of the strip (2) and that the two pairs of pinching rolls (8, 8') are associated respectively with individual means of driving into rotation determining an angular speed of the downstream rolls (8') slightly greater than the angular speed of the upstream rolls (8), in order to exert on the strip (2) a determined tension of applying on the flatness measuring roll (1).

**14.** Detection device according to claim 13, **characterized by** the fact that the rotation speeds and the torques applied on the two pairs of pinching rolls, respectively upstream (8) and downstream (8') are adjusted according to the rolling speed in order to determine separately the tension levels of the strip (2), respectively, at the exit of the rolling mill (6), on the flatness measuring roll (1) and on the coiler (21).

**15.** Detection device according to anyone of claims 5 to 14, **characterized by** the fact that the flatness measuring roll (1) is of the type comprising a plurality of detection zones spaced out in a transverse direction to the strip and distributed along the whole length of the roll, each detection zone comprising a transducer of signal burst depending on the applying pressure of a corresponding zone of the strip during the going of said strip in the angular sector of contact, and that said detection zones are brought back to the same equilibrium temperature, at each going in the free sector of the roll.

**Patentansprüche**

**1.** Verfahren zur Prüfung der Ebenheit eines Produkts in Form eines Metallbands, das in Längsrichtung läuft und eine erhöhte Temperatur aufweist, bei dem das Band (2) unter Spannung gesetzt und auf einen Winkelabschnitt einer Messwalze für die Ebenheit (1) aufgebracht wird, wobei die Messwalze drehbar um eine rechtwinklig zur Laufrichtung des Bandes (2) liegende Achse angebracht ist und eine zylindrische Außenseite (13) aufweist, die einen Winkelabschnitt enthält, in dem Kontakt mit dem Metallband besteht, sowie einen Abschnitt ohne Bandkontakt, **dadurch gekennzeichnet, dass** eine erzwungene Abkühlung der Messwalze für die Ebenheit (1) erreicht wird, indem ein Kühlmittel an mindestens einem Teil der Außenfläche (13) der Walze (1) ohne Kontakt zirkuliert, und dass die Parameter, die die Effizienz der Kühlung bestimmen, wie der Winkel (B) des. Winkelabschnitts zur Kühlung, an dem die Flüssigkeit entlangfließt, die anfängliche Temperatur der Flüssigkeit sowie der Durchsatz bei der Zirkulation so festgelegt werden, dass die Außenfläche (13) der Walze (1) nach Durchlaufen des Abschnitts (a, a') mit Kontakt zum Metallband (2) und dadurch verursachte Erwärmung aufgrund des Durchlaufs durch den Kühlabschnitt (b, b') der Walze (1) wieder auf eine vorbestimmte Gleichgewichtstemperatur gebracht wird.

**2.** Vorgehen nach Anspruch 1, **gekennzeichnet dadurch, dass** die erzwungene Kühlung der Walze (1) durch Besprühen mit einem Kühlmittel mindestens eines Teils des Abschnitts von Walze (1) ohne Bandkontakt erreicht wird, und dass mindestens die Temperatur des Kühlmittels sowie der Durchsatz beim Besprühen abhängig von der Temperatur des Bands (2) und den Wärmeaustauschbedingungen gewählt wird, sodass die Temperatur der Außenfläche (13) der Walze (1) unmittelbar vor dem Durchlauf des Abschnitts mit Bandkontakt (a, a') auf einen vorbestimmten Wert gebracht wird.

3. Verfahren nach Anspruch 1, **gekennzeichnet dadurch, dass** die Messwalze für die Ebenheit (1) unterhalb des Bands (2) platziert ist, dass ihre Außenfläche (13) einen unteren Teil (b, b') enthält, der in ein Kühlmittelbad (31) in einer Wanne (3) unterhalb der Walze (1) getaucht wird, wobei die Wanne mit Mitteln für den Kühlmittelumlauf ausgestattet ist und der Durchsatz zwischen einer Eingangs- und Ausgangsöffnung der Wanne (3) steuerbar ist, und dass zumindest die anfängliche Temperatur des Kühlmittels bei seinem Eintritt in das Bad und der Umlaufdurchsatz gesteuert werden, sodass die Temperatur der Außenfläche (13) der Walze (1) vor jedem Durchlaufen des Kontaktabschnitts (a, a') auf einen vorbestimmten Wert gebracht wird.

4. Verfahren nach einem der Ansprüche 1, 2 oder 3, **gekennzeichnet dadurch, dass** die Außenfläche (13) der Walze (1) vor jedem Durchlaufen des Kontaktabschnitts (a, a') auf eine Gleichgewichtstemperatur (t) gebracht wird, die mit der Temperatur des Metallbands ($t_1$) und der Temperatur des Kühlmittels ($t_2$) durch eine Formel folgender Art in Zusammenhang steht:

$$t = \frac{a\sqrt{A}\ t_1 + b\sqrt{B}\ t_2}{a\sqrt{A} + b\sqrt{B}}$$

wobei (a) der wärmetauschkoeffizient zwischen dem Hand (2) und der Walze (1), (b) der Wärmetauschkoeffizient zwischen dem Kühlmittel (31) und der Walze (1), (A) der Öffnungswinkel des Kontaktabschnitts (a, a') und (B) der Öffnungswinkel des Kühlabschnitts (b, b') ist, und dass im Betrieb mindestens einer der Parameter der genannten Formel verändert wird, um die Gleichgewichtstemperatur (t) auf einem konstanten Wert zu halten.

5. Vorrichtung zur Prüfung der Ebenheit eines Produkts in Bandform (2), das in Längsrichtung läuft und unter Zug gesetzt wird, mit einer Walze zur Prüfung der Ebenheit (1), die drehbar um eine Achse angebracht ist, die rechtwinklig zur Laufrichtung des Bands liegt und auf die das Band (2) unter Spannung aufgebracht wird, wobei die genannte Walze (1) eine zylindrische Außenfläche (13) mit einem Winkelabschnitt (a, a') enthält, in dem Kontakt mit dem Band besteht, sowie einen Abschnitt ohne Bandkontakt,
**gekennzeichnet dadurch, dass** sie Mittel (3, 34) zur erzwungenen Kühlung der Außenfläche (13) der Walze zur Ebenheitsprüfung (1) enthält, bei denen die Kühlung durch Umlauf eines Kühlmittels an mindestens einem Teil (b, b') des Abschnitts der Walze (1) ohne Kontakt erreicht wird, sowie Steuerungsmittel (30) für die Kühlbedingungen zur Erhaltung einer festgelegten Temperatur an der Außenfläche (13) der Walze (1).

6. Prüfvorrichtung nach Anspruch 5, **dadurch gekennzeichnet, dass** die Messwalze (1) sich unterhalb des Bands (2) befindet und einen oberen Winkelabschnitt (a, a') mit Kontakt mit dem Band (2) sowie einen unteren Winkelabschnitt (b, b') ohne Bandkontakt aufweist, das Mittel zur erzwungenen Kühlung eine Wanne (3) umfasst, die mit einem Kühlmittel (31) gefüllt ist, in das mindestens ein Teil (b, b') des Walzenabschnitts ohne Bandkontakt getaucht wird, und an die ein Umlaufkreis mit Kühlmittel angeschlossen ist, der ein Mittel (30) zur Steuerung der Temperatur ($t_2$) und des Umlaufdurchsatzes der Flüssigkeit (31) abhängig von der Temperatur ($t_1$) des Bands (2) enthält.

7. Prüfvorrichtung nach Anspruch 5, **gekennzeichnet dadurch, dass** das Mittel zur erzwungenen Kühlung mindestens ein Sprühsystem (35) parallel zur Außenfläche (13) der Walze aufweist, das an einen Kühlmittelkreislauf (36) angeschlossen ist und mit mehreren Sprühdüsen (37) versehen ist, die jeweils mit einem Flüssigkeitsstrahl einen Winkelabschnitt (B) zur Kühlung abdecken, wobei der Kreislauf (36) mit Mitteln (36') verbunden ist, die den Durchsatz beim Sprühen abhängig von der Temperatur des Bands (2) steuern.

8. Prüfvorrichtung nach Anspruch 7, **gekennzeichnet dadurch, dass** sie eine Kühlkassette (30) enthält, die sich neben dem Walzenabschnitt ohne Bandkontakt befindet, und in deren Innerem sich mindestens ein System (35) zum Versprühen von Flüssigkeit befindet, wobei die genannte Kassette (30) zwei Längsseiten (33, 34) hat, die parallel zur Achse der Walze (1) liegen und winklig daran verlaufen, sodass ein Abschnitt (B) zur Walzenkühlung begrenzt wird, und wobei jede Längsseite eine Kante (33', 34') aufweist, die parallel zur Außenfläche (13) der Walze und in geringer Entfernung von ihr liegt.

9. Vorrichtung nach einem der Ansprüche 5 bis 8, **gekennzeichnet dadurch, dass** sie ein Mittel (5) zur schnellen Entfernung des Bands (2) von der Walze (1) enthält.

10. Prüfvorrichtung nach Anspruch 9, **gekennzeichnet dadurch, dass** die Messwalze (1) drehbar um ihre Achse (10) und auf einem Stützwagen (7, 16) angebracht ist, der quer zur Laufrichtung des Bands (2) verschoben werden

kann, zwischen einer Betriebsposition der Walze (1) am Band und einer entfernten Position, wobei der genannte Wagen (7, 16) mit zwei Umlenkwalzen (25, 25') (82, 82') verbunden ist, die sich jeweils in Laufrichtung des Bands (2) oberhalb und unterhalb der Messwalze (1) und gegenüber des Wagens befinden, sodass das Band (2) in Betriebsposition der Walze in einem vorbestimmten winkelabschnitt (A) auf diese Walze (1) aufgebracht wird.

**11.** Prüfvorrichtung nach Anspruch 10, **gekennzeichnet dadurch, dass** der Stützwagen (7) der Walze schwenkbar um eine Achse (70) angebracht ist, die parallel zur Achse der Walze (1) liegt und zu der mindestens ein Regelzylinder (71) gehört, der das Schwenken des Wagens (7) zwischen einer Betriebsposition der Walze (1) am Band (2) und einer entfernten Position steuert.

**12.** Prüfvorrichtung nach Anspruch 10, **gekennzeichnet dadurch, dass** der Stützwagen (16) der Walze rechtwinklig zur Laufrichtung des Bands (2) und verschiebbar zwischen einer Betriebsposition und einer entfernten Position angebracht ist.

**13.** Prüfvorrichtung nach einem der Ansprüche 10 bis 12, **gekennzeichnet dadurch, dass** die Messwalze (1) sich zwischen zwei Klemmwalzenpaaren befindet, die jeweils oberhalb (8) und unterhalb (8') platziert sind, und von denen zum Einklemmen des Bands (2) jeweils eine Walze fest (81) und eine in Vertikalrichtung beweglich (82) ist, und dass die zwei Klemmwalzenpaare (8, 8') mit unabhängigen Mitteln zur Drehung verbunden sind, die eine Winkelgeschwindigkeit der in Laufrichtung unteren Walzen (8') so bestimmen, dass sie etwas höher als die Winkelgeschwindigkeit der oberen Walzen (8) ist, sodass das Band (2) auf der Messwalze (1) einer vorbestimmten Betriebsspannung ausgesetzt wird.

**14.** Prüfvorrichtung nach Anspruch 13, **gekennzeichnet dadurch, dass** die angewandten Drehgeschwindigkeiten und Drehmomente auf den vorgelagerten (8) und nachgelagerten (8') Klemmwalzenpaaren in Abhängigkeit von der Walzgeschwindigkeit gesteuert werden, um die Spannungen des Bands (2) jeweils am Ausgang der walzmaschine (6), auf der Messwalze (1) und auf der Haspelanlage (21) getrennt voneinander feststellen zu können.

**15.** Prüfvorrichtung nach einem der Ansprüche 5 bis 14, **gekennzeichnet dadurch, dass** die Messwalze mehrere Prüfbereiche enthält, die in Querrichtung zum Band liegen und auf die gesamte Länge der Walze verteilt sind, wobei jeder Prüfbereich einen Sensor für ein Signal enthält, das vom Anpressdruck des jeweiligen Bereichs des Bands während seines Durchlaufs im Kontaktabschnitt abhängt, und dass die genannten Prüfbereiche bei jedem Durchlauf des Walzenabschnitts ohne Bandkontakt auf dieselbe Gleichgewichtstemperatur gebracht werden.

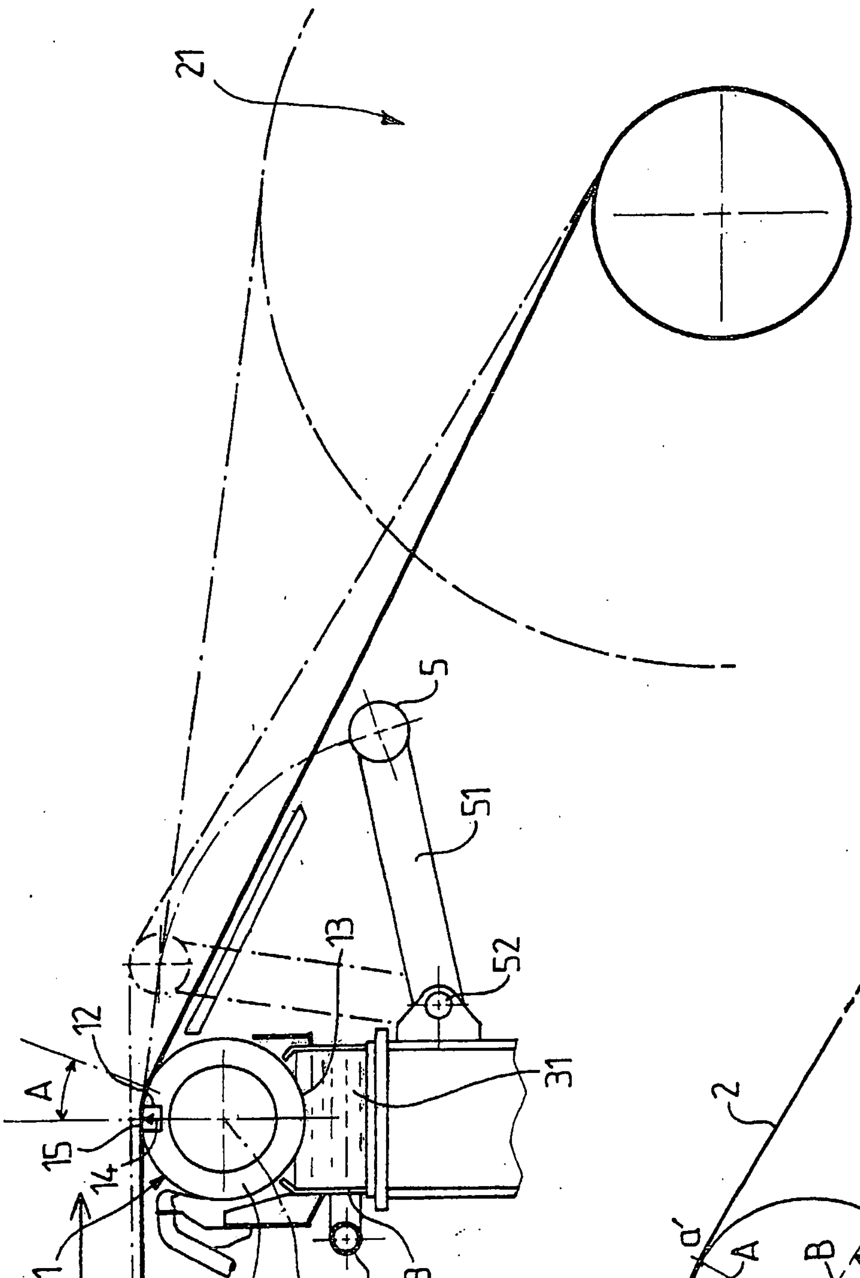


FIG.1

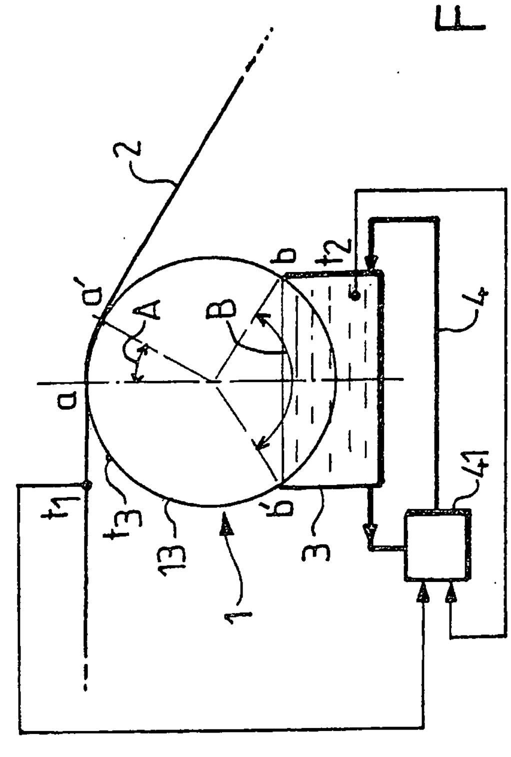


FIG.2

FIG.3

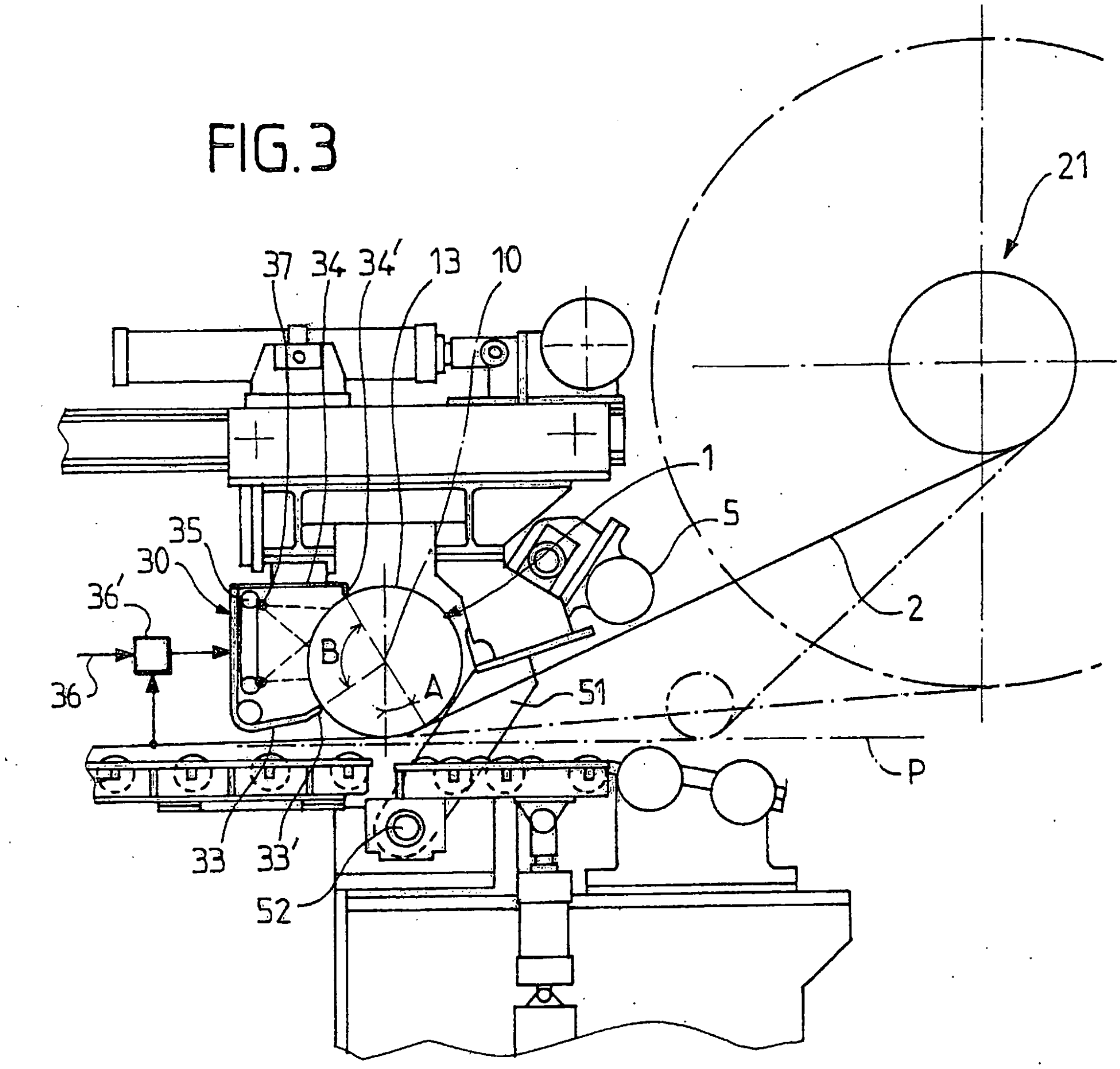


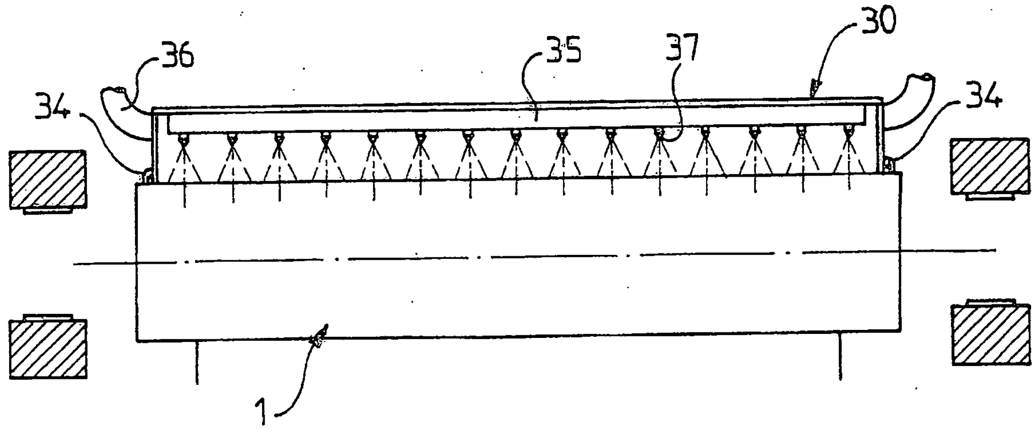


FIG.4

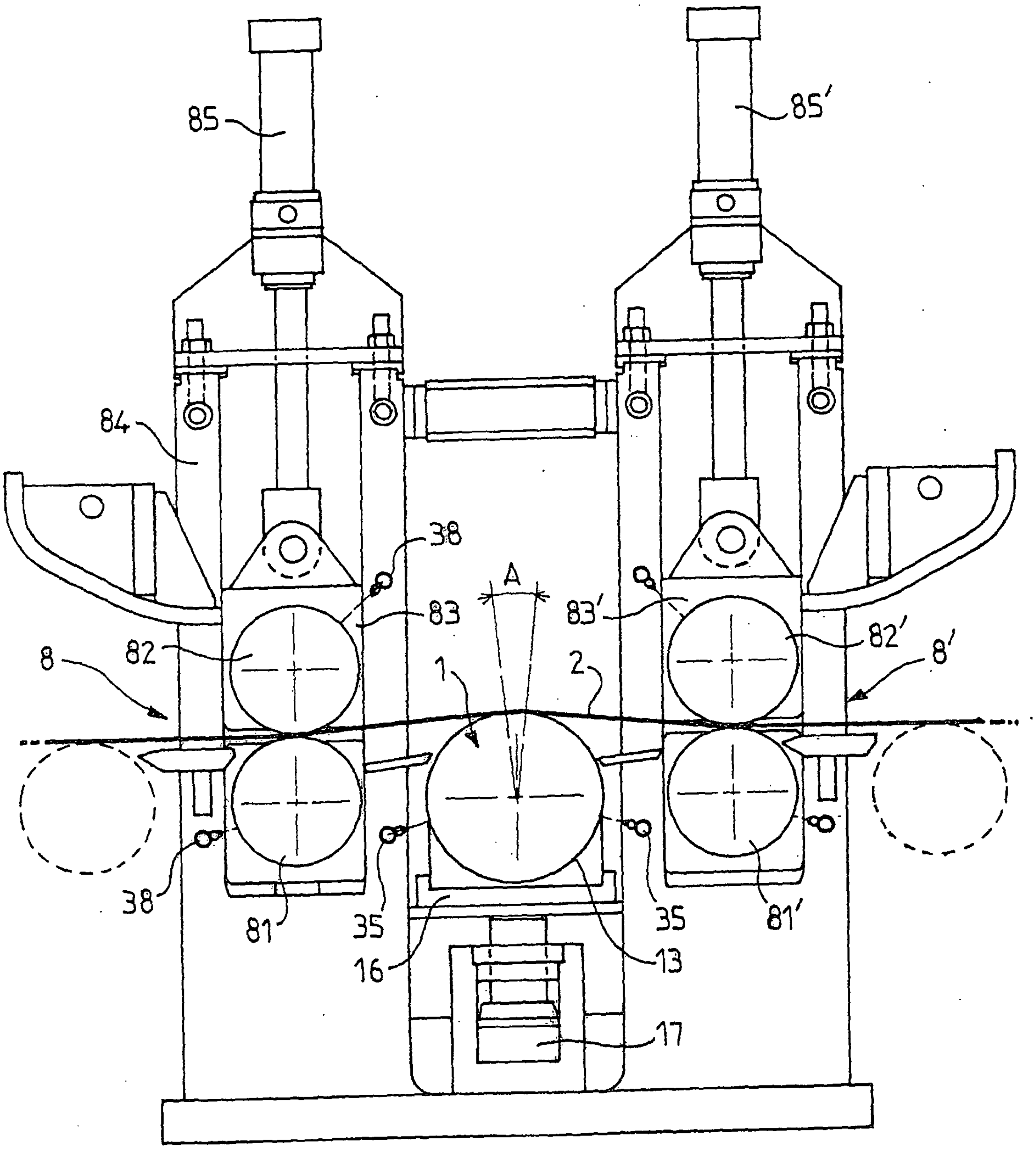


FIG.5

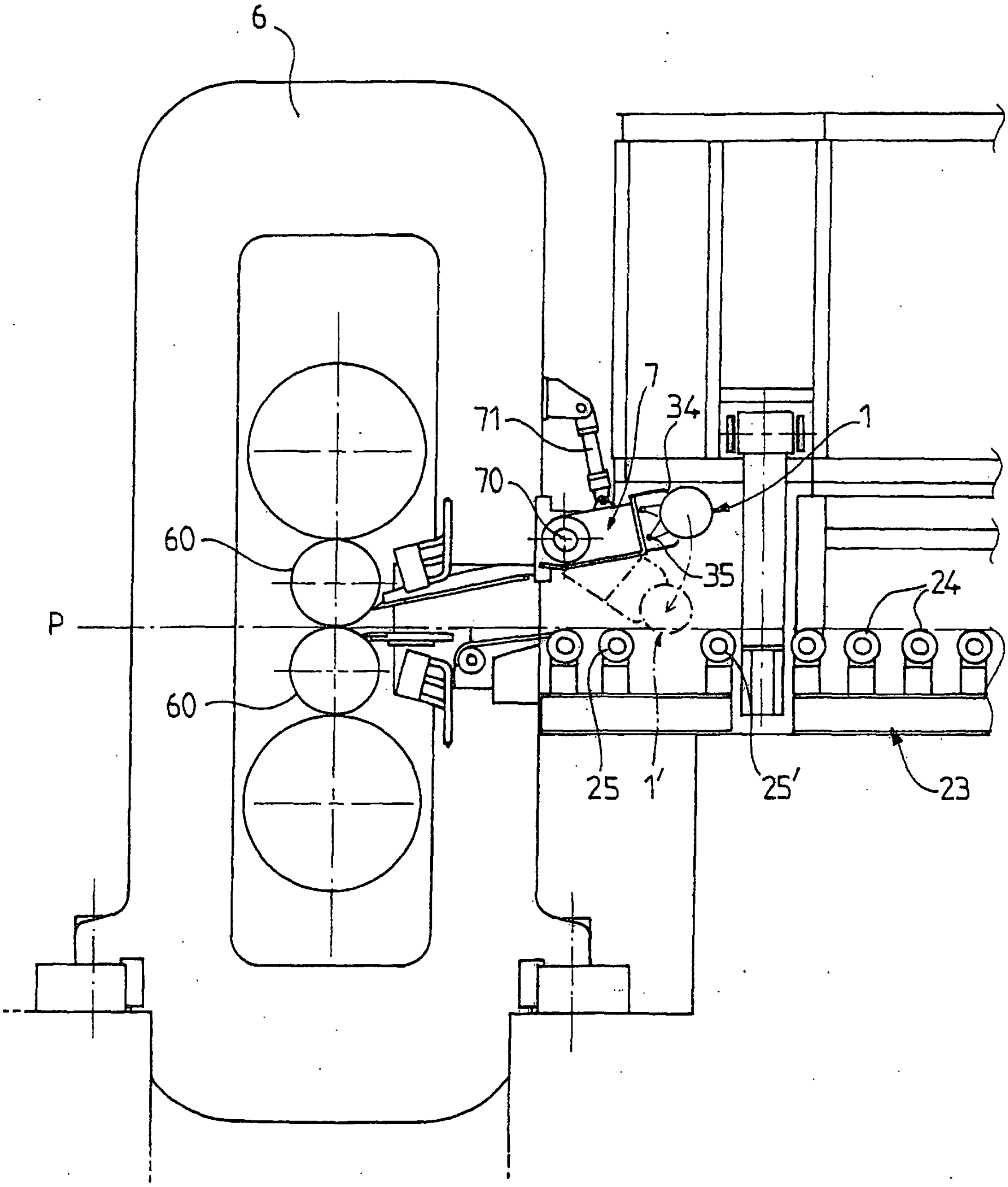


FIG.6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 3481194 A
- EP 0858845 A
- FR 2468878